# EUROPEAN PATENT SPECIFICATION

(11) **EP 0 912 794 B1**
(45) Date of publication and mention of the grant of the patent: **27.11.2002**
(21) Application number: 97952160.6
(22) Date of filing: 22.12.1997
(51) Int. Cl.: D21D 5/02, D21D 5/16

(54) **A CYLINDRICAL SCREEN AND A METHOD OF PRODUCING THE SAME**
SIEBZYLINDER UND VERFAHREN ZU SEINER HERSTELLUNG
CLASSEUR CYLINDRIQUE ET PROCEDE DE PRODUCTION CORRESPONDANT

(30) Priority: 27.12.1996 SE 9604801
(43) Date of publication of application: 06.05.1999
(73) Proprietor: GL&V Sweden AB, 129 22 Hägersten (SE)
(72) Inventor: ANDERSSON, Roine, S-175 64 Järfälla (SE)
(74) Representative: Lerwill, John
(86) International application number: SE9702202
(87) International publication number: WO98029599

(56) References cited:
- EP-A- 0 046 687
- WO-A-93/04797
- US-A- 5 587 077

## Description

The present invention relates to a cylindrical screen with an inlet side and an outlet side for the kind of pressure screening device which is intended for separating undesired particles from paper pulp suspensions and which has a rotor with a number of rotor wings adapted to move along a cylindrical path, which is coaxial with the cylindrical screen and which extends quite close to the inlet side of the screen. The screen comprises an axial inlet end at the inlet side for receiving the suspension to be separated, an axial reject end at the inlet side for removing separated particles, elongated flow deflecting members, which are arranged at the inlet side of the screen and which are distributed around the circumference of the screen, and screen holes arranged between the flow deflecting members. Each elongated flow deflecting member extends obliquely relative to the centre axis of the cylindrical screen and forwards relative to the direction of rotation of said rotor wings as seen from the inlet end of the screen towards the reject end of the screen, whereby during operation, when the screen is mounted in said pressure screening device, the flow deflecting members deflect the suspension flow containing separated particles entrained by said rotor wings along said cylindrical path, so that the suspension flow gets a component of movement towards the reject end of the screen. The invention also relates to a method of producing such a cylindrical screen.

It is important that said oblique flow deflecting members of a conventional screen of this kind efficiently promotes rapid transportation of separated particles towards the reject end of the screen, since each time a particle is passed by a rotor wing it is subjected to a pulse, which means that the particle runs the risk of being turned so that it may pass through a screen hole. The efficiency of the screen with respect to separation of undesired particles decreases therefore with increasing number of pulses that each particle is subjected to.

The capacity of the screen depends on the number of screen holes arranged per surface unit, i.e. how large an open area the screen has. The open area of the screen is, however, limited by reasons of strength (the more screen holes the weaker screen) and by the number of flow deflecting members (more flow deflecting members means room for fewer screen holes). If the open area is made relatively large at the expense of fewer flow deflecting members the problem arises, however, that the efficiency of the screen with respect to separation of undesired particles is reduced.

EP-B-0 046 687 discloses a screen, which comprises a cylindrical plate of uniform thickness and which in one embodiment is provided with oblique flow deflecting members in the form of bars, which are welded on the inlet side of the screen. Between adjacent bars there are a plurality of screen holes distributed in the circumferencial direction of the screen. It is mentioned that the distance between adjacent bars may be varied from 6.35 to 127 mm, in particuler from 12.7 to 127 mm.

The object of the present invention is to provide a cylindrical screen for pressure screening apparatuses and having an improved efficiency with respect to separation of undesired particles without the capacity being reduced, as compared with conventional screens.

This object is obtained by a screen of the kind initially stated, which is characterized in that the distance between adjacent operative flow deflecting members as seen in the circumferential direction of the screen is less than six millimeters. Hereby a screen with many flow deflecting members is obtained, which gives a high efficiency with respect to separation of undesired particles. The short distance between adjacent flow deflecting members permits room for only one or possibly two screen holes between said members as seen in the circumferential direction of the cylindrical screen, which gives the advantage that the screen holes are efficiently cleansed from plugging fibres, as the rotor wings pass the screen holes. The efficient cleansing of the screen holes is due to that the pulse from a passing rotor wing creates a strong local turbulence in the narrow area between adjacent flow deflecting members, which uncovers the screen holes from possibly plugging fibres. The theoretical reduced open area of the screen, which is due to the great number of flow deflecting members, is thus surprisingly compensated by said strong local turbulence which arises during operation and which in practice gives at least as large an open area of the screen according to the invention as that of conventional screens with fewer flow deflecting members and more screen holes. In addition, the pulse frequency from the rotor wings increases with increasing number of flow deflecting members, which contributes to maintain the screen holes uncovered.

Each elongated flow deflecting member preferably forms an angle to a generatrix to the cylindrical screen which is in the range of 1-40° and which may be constant. Each flow deflecting member may advantageously form an angle to said generatrix relatively close to the reject end of the screen which is larger than the angle each flow deflecting member forms with said generatrix relatively close to the inlet end of the screen. Hereby, the flow deflecting members will give the suspension flow a larger component of movement towards the reject end of the screen relatively close to the reject end of the screen, where the share of undesired particles in the suspension is relatively large, than relatively close to the inlet end of the screen. Each flow deflecting member may be arranged such that said angle increases stepwise or continuously when the generatrix is moved so that the intersection point between said members and the generatrix is moved in the direction towards the reject end of the screen.

According to a preferred embodiment of the screen according to the invention, the screen is formed by a plane plate of uniform thickness, which is bent to cylindrical shape. A multiplicity of elongated parallel grooves are formed in the plate on the inlet side of the screen by material reducing machining of the plate, the screen holes of the screen opening in said grooves. The grooves are confined by elongated wall surfaces which constitute said flow deflecting members. Said wall surfaces comprise two opposite wall surfaces along each groove, and therefore it is realized that during operation one of said two opposite wall surfaces will be operative as a flow deflecting member of the kind here intended, to affect the suspension flow so that it will get a component of movement towards the reject end of the screen. The screen holes may suitably be oriented in rows, one single row of screen holes extending between adjacent flow deflecting members.

According to another embodiment of the screen according to the invention, the screen is formed by a multiplicity of separate elongated solid wall elements arranged in a circular row. Adjacent wall elements extend in parallel with and at a small distance from each other, so that an elongated gap is formed between them and constitutes one of said screen holes. On the inlet side of the screen adjacent wall elements form grooves which are confined by elongated wall surfaces, which constitute said flow deflecting members.

A further object of the present invention is to provide a simple method of producing a cylindrical screen of the kind here present.

This object is achieved by a method which comprises the steps of: a) forming a multiplicity of elongated parallel grooves on one side of a plane plate of uniform thickness by material reducing machining of the plate; b) forming screen holes in the plane plate in the area of each groove by machine cutting of the plate, so that the screen holes extend from the grooves and diverge towards the opposite side of the plate, and c) bending the plate to a cylindrical shape, so that the grooves are on the intremal side of the cylindrical plate characterized in that said screen holes are formed in the plane plate such that they extend from said grooves and diverge towards the opposite side of the plate, that said grooves are formed such that ridges are left on both sides of every groove, forming flow deflecting members on the completed screen, the distance between the formed flow deflecting members being less than six millimeters in the circumferential direction of the screen, and that the screen is formed such that said grooves extend obliquely relative to the centre axis of the cylindrical plate when the plate has been bent to cylindrical shape.

By bending the plate to a cylinder once the screen holes have been cut, the openings of the screen holes on the internal side of the cylindrical screen will be thinner as compared to the corresponding openings on the original plane plate, which gives the advantage that particularly thin inlet openings can be formed even by means of relatively coarse but reliable cutting tools.

The plane plate may be rectangular and the elongated grooves may be formed so that they extend obliquely relative to the side edges of the plate. Then, the plate may be bent to its cylindrical shape so that two of the opposite edges of the plate abut each other, whereby the grooves extend obliquely relative to the centre axis of the cylindrical plate. As an alternative, the plate may initially be provided with the grooves and then be cut to rectangular shape, so that the grooves extend obliquely relative to the side edges of the plate.

Each screen hole may be formed by laser cutting by means of a laser beam which cuts through the plane plate from said opposite side of the plate. The laser beam suitably has an axial cross-section which converge through the plate in the direction from said one side of the plate. As a result, diverging screen holes are obtained with the aid of one single laser beam.

As an alternative, each screen hole may be formed by water cutting.

The invention is explained more closely in the following with reference to the accompanying drawings, in which
figure 1 schematically shows a longitudinal sectional view through a conventional pressure screening apparatus,
figure 2 shows a cylindrical screen according to the invention for use in the pressure screening apparatus according to figure 1,
figures 3-5 schematically show the inlet sides of three cylindrical screens according to the invention having different arrangement of flow deflecting members,
figure 6 shows an end view of a screen according to the invention with flow deflecting members arranged on the internal side of the screen,
figure 7 shows an end view of a screen according to the invention with flow deflecting members arranged on the external side of the screen,
figure 8 shows a part of a cross-section through a preferred embodiment of the screen according to the invention, and
figure 9 shows a part of a cross-section through another embodiment of the screen according to the invention.

In the figures, components with the same function are provided with the same reference numerals.

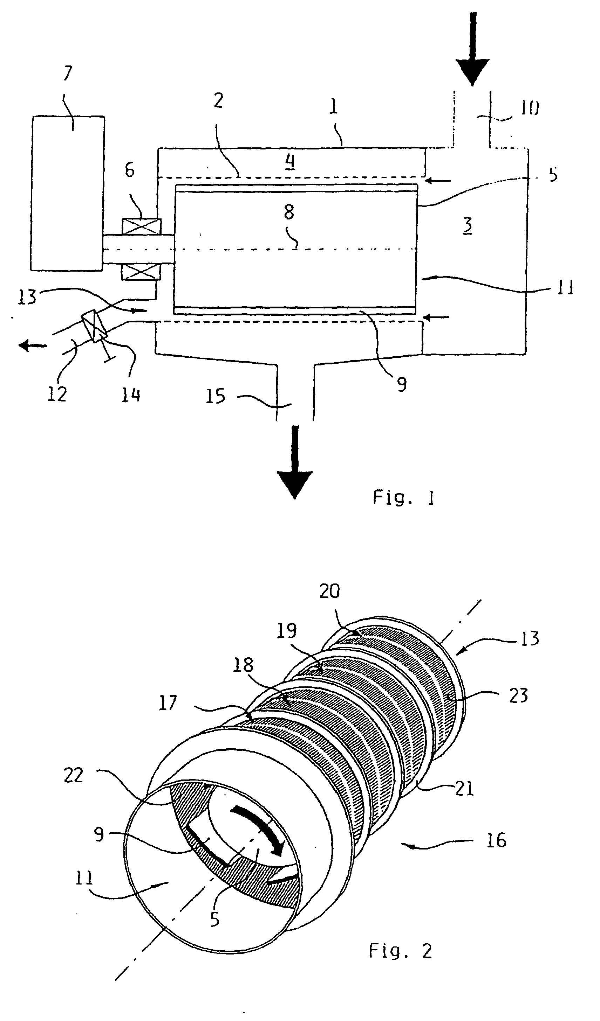

In figure 1 there is shown a conventional pressure screening apparatus comprising a hollow housing 1, a stationary circular cylindrical screen 2, which extends within the housing 1 and which divides the interior of the housing 1 into a chamber 3 for pulp suspension to be screened by the screen 2 and an annular chamber 4 for receiving screened pulp suspension. A rotor 5 is journalled in the housing 1 by means of a bearing 6 and extends in the interior of the screen 2, the rotor 5 being rotatable by a drive motor 7 about an axis 8 which is coaxial with the screen 2. The rotor 5 is provided with four rotor wings 9 (more or less than four rotor wings may however be arranged), which extend axially along the rotor 5 and at a small distance from the screen 2. The purpose of the rotor wings 9 is to prevent clogging of the screen holes of the screen 2 and to maintain a flow of suspension in the circumferential direction of the screen.

The chamber 3 has an inlet 10 for supplying pulp suspension to be separated to an axial inlet end 11 of the screen 2 and a reject outlet 12 for discharging separated contaminants from an axial outlet end 13 of the screen 2. In the reject outlet 12 there is a valve 14 for adjusting the reject flow. The annular chamber 4 has an accept outlet 15 for separated suspension.

In figure 2 there is shown a cylindrical screen 16 according to a preferred embodiment of the invention intended to be used in the pressure screening apparatus according to figure 1. The screen 16 comprises four separate cylindrical screen elements 17-20, which are releasably coupled to each other by means of annular coupling members 21. As an alternative, the screen 16 may be formed in one single piece. Since the screen 16 is worn faster at the reject end 13 than at the inlet end 11 the screen 16 can be renovated at a low price by exchanging only the screen element 20 which is located closest to the reject end 13 by a new one. In addition to this, the screen 16 may be adapted to different operation conditions by coupling together screen elements 17-20 with different screen hole patterns and/or different arrangements of flow deflecting members. In the screen 16 there is also shown the rotor 5 and the direction of rotation thereof. On the inlet side of the screen 16 each screen element 17-20 has a multiplicity of elongated flow deflecting members 22 distributed around the circumference of the screen 16, the distance between adjacent operative flow deflecting members 22 as seen in the circumferential direction of the screen 16 being less than 6 mm. Each member 22 extends obliquely relative to the centre axis 23 of the screen and forwards relative to the direction of rotation of the rotor wings 9 as seen from the inlet end 11 of the screen 16 towards the reject end 13 of the screen 16. Between adjacent members 22 there are screen holes in the form of slots 23.

During operation, when the screen 16 is mounted in the pressure screening apparatus according to figure 1, the drive motor 7 drives the rotor 5 so that the rotor wings 9 move along a relatively thin cylindrical path, which is coaxial with the screen 16 and which extends close to the inlet side of the screen 16, here the internal side of the screen 16. The suspension flow containing separated undesired particles that are entrained by the rotor wings 9 along the cylindrical path is deflected by the obliquely arranged flow deflecting members 22, so that the suspension flow gets a component of movement towards the reject end 13 of the screen 16.

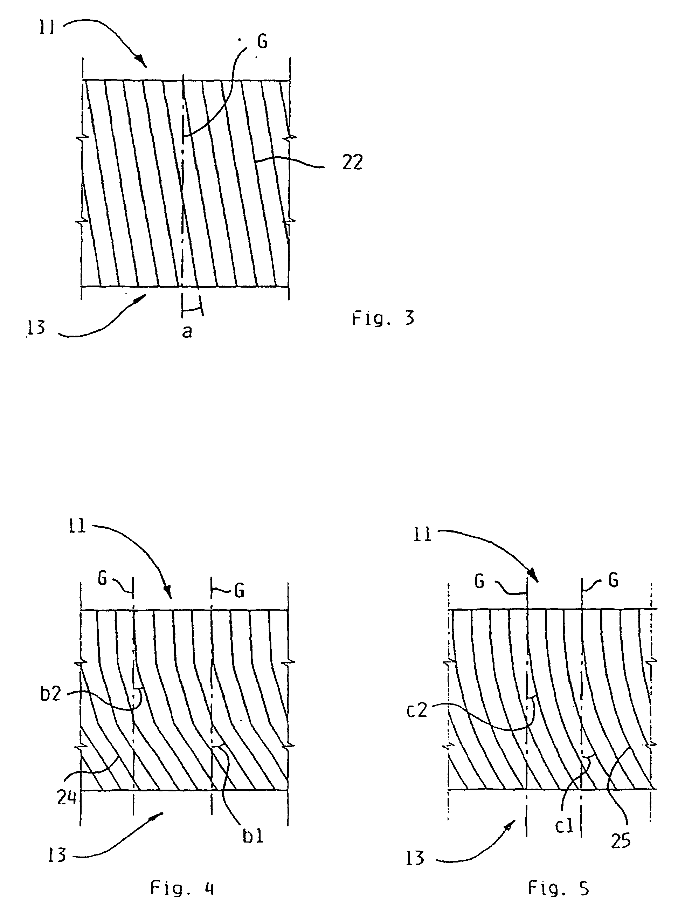

Each flow deflecting member 22 of the screen according to the invention forms an angle a to the generatrix G to the cylindrical screen which should be at least 1° and maximally 40°. In the screen 16 according to figure 2 the angle a is constant regardless of where on the screen 16 said generatrix G intersects a flow deflecting member 22, which is schematically shown in figure 3. As an alternative, each flow deflecting member (24 and 25 in figure 4 and 5, respectively) may form an angle (b1 and c1 in figure 4 and 5, respectively) to the generatrix G relatively close to the reject end 13 of the screen which is greater than the angle (b2 and c2 in figure 4 and 5, respectively) which each flow deflecting member forms to the generatrix G relatively close to the inlet end 11 of the screen. As a result, the suspension flow in said cylindrical path is given a greater component of movement towards the reject end of the screen the closer the flow is to the reject end of the screen. This is favourable to the efficiency of the screen with respect to separated contaminants, since the share of fibres in the suspension in the interior of the screen decreases from the inlet end of the screen to the reject end of the screen, and therefore it is more important to promote the axial transportation of the suspension close to the reject end than to separate fibres through the screen. For instance, each flow deflecting member may be arranged so that it forms an angle b1, b2 which increases continuously (figure 4) or forms an angle c1, c2 which increases stepwise (figure 5), when the generatrix G is moved so that the intersection point between the flow deflecting member and the generatrix G moves in the direction towards the reject end 13 of the screen.

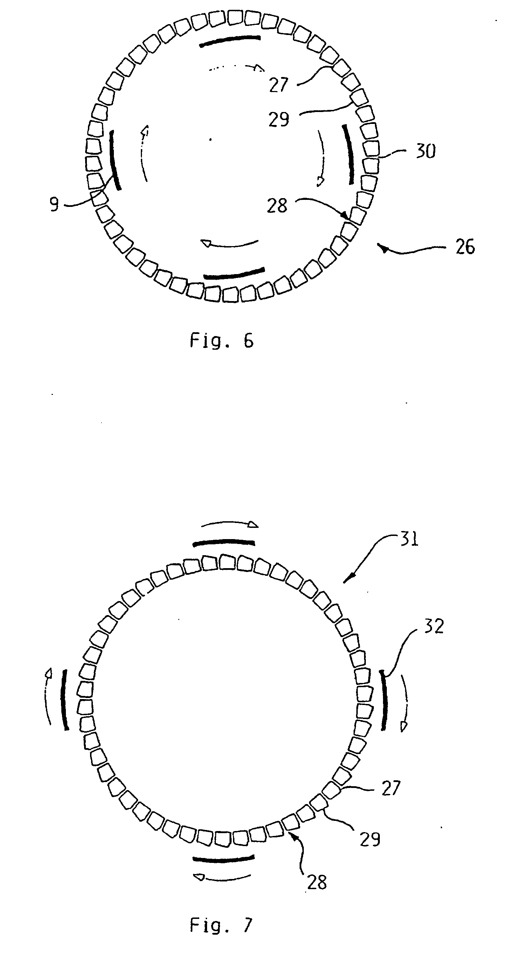

In figure 6 there is, shown an end view of a cylindrical screen 26 according to a preferred embodiment of the present invention with flow deflecting members 22 arranged on the internal side of the screen 26. The screen 26 consists of a plate on which parallel grooves 28 have been milled, so that the inner surface of the screen 26 has a saw-tooth contour with steep flanks 27, which constitute the flow deflecting members, and flattened tooth backs 29. However, it is possible to switch the direction of movement of the rotor wings 9, whereby the flattened tooth backs 29 will be operating as flow deflecting members, though with reduced efficiency as compared to said steep flanks 27. In the area of each groove 28 one single screen hole 30 is arranged, as seen in the circumferential direction of the screen 26.

In figure 7 there is shown an end view of a cylindrical screen 31, according to another embodiment of the invention, which has the same saw-toothed contour as the screen 26 according to figure 6. However, it differs from the screen 26 in that the saw-tooth contour is arranged on the external side of the screen 31. Thus, the screen 31 is intended for the kind of pressure screening apparatus which separates a suspension flow flowing from outside and into the screen 31. In this case, rotor wings 32 sweeping along the external side of the screen 31 are arranged.

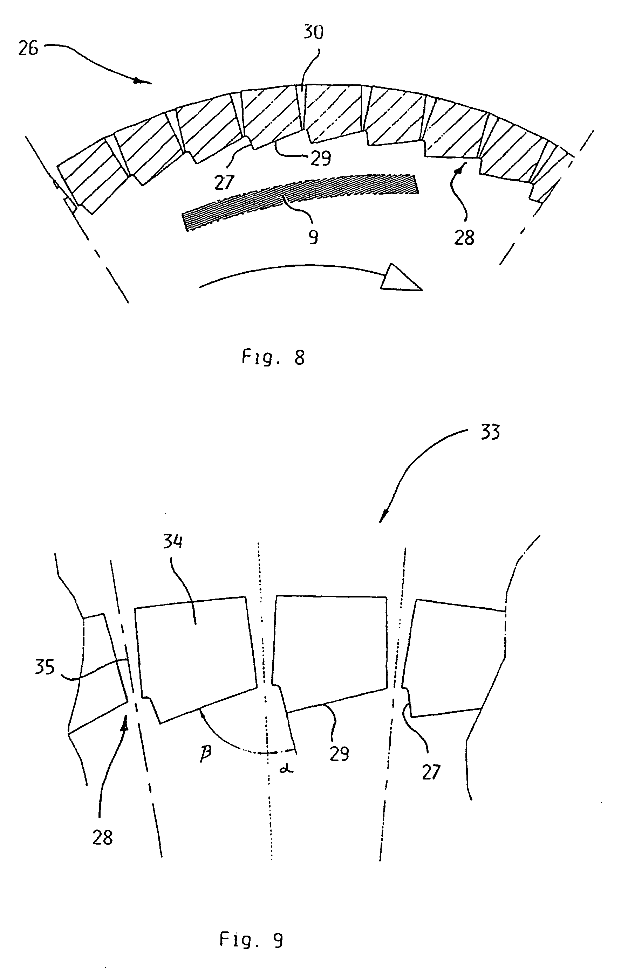

In figure 8 there is shown a part of a cross-section through the screen 26 according to figure 6. The screen 26 may advantageously be produced in the following way. On one side of a plane plate of uniform thickness a multiplicity of elongated parallel grooves 28 are formed by material reducing machining of the plate, preferably milling. Each groove 28 is formed as a V, as seen in a cross-section through the groove 28, with a right angle between the legs of the V, so that the plate has a saw-toothed contour with steep flanks 27 and flattened tooth backs 29. The distance between adjacent flanks is less than 6 mm. Screen holes 30 are formed in the plate in the area of each groove 28 by means of a laser beam which cuts through the plate from the opposite groove-less side of the plate. The laser beam is focused outside the plate adjacent the side of the plate which is provided with the grooves 28, whereby the laser beam converges through the plate and forms screen holes 30 which diverge from the grooves 28 to the groove-less side of the plate. When cutting each screen hole 30, the plate is moved relative to the laser beam, so that the screen hole 30 takes the form of a slot extending along its groove 28. Finally the plate is bent with grooves 28 and screen holes 30 to a cylindrical shape, so that the grooves 28 are on the internal side of the cylindrical plate and extend obliquely relative to the centre axis of the cylindrical plate. Due to the bending of the plate to the cylindrical shape, the angle between the flank 27 and the tooth back 29 of each groove 28 becomes less than 90°. In addition to this, the inlet opening of each screen hole 30 becomes thinner.

A simple way of forming the obliquely extending grooves 28 is to start from a rectangular plane plate and form the grooves 28 so that they extend obliquely relative to the side edges of the plate, after which the plate is bent to its cylindrical shape so that two of the opposite side edges of the plate abut each other. As an alternative, the plane plate may initially be provided with the grooves 28 and then be cut to rectangular shape, so that the grooves extend obliquely relative to the side edges of the plate.

As an alternative to laser cutting, the screen holes 30 may also be formed by water cutting. In this case, however, each cutting water jet is ejected towards the side of the plane plate which is provided with the grooves 28.

Figure 9 shows a part of an end view of a screen 33 according to another embodiment of the invention. The screen 33 resembles the screen 26 in that it has the same saw-toothed contour on its internal side. However, the screen 33 differs from the screen 26 in that it is formed by a multiplicity of separate elongated wall elements 34, which are arranged in a circular row. Adjacent wall elements 34 extend in parallel with and at a small distance from each other, so that an elongated gap 35 is formed between them and constitutes a screen hole. The wall elements 34 have a cross sectional shape which gives a saw-toothed inner contour of the screen 33 which is identical to the inner contour of the screen 26 according to figure 8.

In figure 9 there is shown an angle α between the radius of the screen 33 and a flank 27 of a groove 28, and an angle β between the radius of the screen 33 and the tooth back 29 of said groove 28. As mentioned above, in the embodiments according to figures 8 and 9 the sum of the angles α and β is less than 90°. This angle sum may, however, be greater than 90°. For instance, the angle α may vary between 5-80° and the angle β may vary between 5-85°. The angles α and β may also be equivalent. However, it is preferred that the angle α is somewhat less than 15° and that the angle β is somewhat less than 75°. The angle figures stated are also applicable to the screen 26 according to figure 8.

## Claims

1. A cylindrical screen (16,26,31,33) with an inlet side and an outlet side for the kind of pressure screening apparatus, which is intended for separation of undesired particles from paper pulp suspensions and which has a rotor (5) with a number of rotor wings (9) adapted to move along a cylindrical path, which is coaxial with the cylindrical screen and which extends quite close to the inlet side of the screen, which screen comprises an axial inlet end (11) at the inlet side for receiving the suspension to be separated, an axial reject end (13) at the inlet side for removing separated particles, elongated flow deflecting members (22,24,25,27), which are arranged on the inlet side of the screen and which are distributed around the circumference of the screen, and screen holes (23,30,35) arranged between the flow deflecting members, each elongated flow deflecting member extending obliquely relative to the centre axis of the cylindrical screen and forwards relative to the direction of rotation of said rotor wings as seen from the inlet end of the screen towards the reject end of the screen, whereby during operation, when the screen is mounted in said pressure screening apparatus, the flow deflecting members deflect the suspension flow containing separated particles that are entrained by said rotor wings along said cylindrical path, so that the suspension flow gets a component of movement towards the reject end of the screen, **characterized in that** the distance between adjacent operative flow deflecting members (22,24,25,27) as seen in the circumferential direction of the screen is less than 6 mm.

2. A screen according to claim 2, **characte** **rized in** that each elongated flow deflecting member (22,24,25,27) forms an angle to the generatrix (G) to the cylindrical screen which is in the range of 1-40°.

3. A screen according to claim 2, **characterized in that** each flow deflecting member (22) forms a constant angle (a) to the generatrix (G) to the cylindrical screen.

4. A screen according to claim 2, **characterized in that** each flow deflecting member (24;25) forms an angle (b1;c1) to said generatrix (G) relatively close to the reject end (13) of the screen which is greater than the angle (b2;c2) each flow deflecting member forms to said generatrix relatively close to the inlet end (11) of the screen.

5. A screen according to claim 4, **characterized in that** each flow deflecting member (25) forms an angle (cl,c2) to said generatrix (G) which increases continuously when the generatrix is moved so that the intersection point between said member and the generatrix moves in the direction towards the reject end (13) of the screen.

6. A screen according to claim 4, **characterized in that** each flow deflecting member (24) forms an angle (b1,b2) to said generatrix (G) which increases stepwise when the generatrix is moved so that the intersection point between said member and the generatrix moves in the direction towards the reject end (13) of the screen.

7. A screen according to any one of claims 1-6, **characterized in that** the screen (26) is formed by a plane plate of uniform thickness, which is bent to a cylindrical shape, that a multiplicity of elongated parallel grooves (28) are formed in the plate on the inlet side of the screen by material reducing machining of the plate, that the screen holes (30) of the screen open in said grooves, and that the grooves are confined by elongated wall surfaces (27,29) constituting said flow deflecting members.

8. A screen according to claim 7, **characterized in that** the screen holes (30) are oriented in rows, one single row of screen holes extending between adjacent flow deflecting members (27,29).

9. A screen according to any one of claims 1-6, **characterized in that** the screen (33) is formed by a multiplicity of separated elongated solid wall elements (34), which are arranged in a circular row, adjacent wall elements extending in parallel with and at a small distance from each other, so that an elongated gap (35) is formed between them and constitutes one of said screen holes, and that on the inlet side of the screen, adjacent wall elements form grooves which are confined by elongated wall surfaces (27,29) constituting said flow deflecting members.

10. A screen according to any one of the preceding claims, **characterized in that** said inlet side is formed by the internal side of the screen.

11. A screen according to any one of claims 1-9, **characterized in that** said inlet side is formed by the external side of the screen.

12. A method of producing a cylindrical screen for use in a pressure screening apparatus intended for separating undesired particles from paper pulp suspensions, comprising the steps of:
- forming a multiplicity of elongated parallel grooves (28) on one side of a plane plate of uniform thickness by material reducing machining of the plate,
- forming screen holes (30) in the plane plate in the area of each groove by cutting the plate, and
- bending the plate to a cylindrical shape, so that the grooves are on the internal side of the cylindrical plate,
**characterised in that** said screen holes are formed in the plane plate such that they extend from said grooves and diverge towards the opposite side of the plate, that said grooves are formed such that ridges are left on both sides of every groove, forming flow deflecting members (22, 24, 25, 27) on the completed screen, the distance between the formed flow deflecting members being less than six millimeters in the circumferential direction of the screen, and that the screen is formed such that said grooves extend obliquely relative to the center axis of the cylindrical plate when the plate has been bent to cylindrical shape.

13. A method according to claim 12, **characterised in that** the plane plate is rectangular, that the organized grooves (28) are formed such that they extend obliquely relative to the side edges of the plate, and that the plate is bent to its cylindrical shape so that two of the opposite side edges of the plate abut each other.

14. A method according to claim 12, **characterized in that** before the plane plate with formed grooves (28) is bent to a cylindrical shape it is cut to rectangular shape, so that the grooves extend obliquely relative to the side edges of the plate, and that the rectangular plate is bent to a cylindrical shape so that two of the opposite side edges of the plate abut each other.

15. A method according to any one of claims 12-14, **characterized in that** each screen hole (30) is formed by laser cutting.

16. A method according to claim 15, **characterized in that** each screen hole (30) is formed by means of a laser beam which cuts through the plane plate from said opposite side of the plate, the laser beam having an axial cross-section which converges through the plate in the direction from said opposite side towards said one side of the plate.

17. A method according to any one of claims 12-14, **characterized in that** each screen hole (30) is formed by water cutting.

## Patentansprüche

1. Zylindrisches Sieb (16, 26, 31, 33) mit einer Einlass-Seite und einer Auslass-Seite für den Typ Drucksiebapparat, der der Abtrennung unerwünschter Teilchen aus Papierbreisuspensionen dienen soll und der einen Rotor (5) mit einer Anzahl von Rotorenflügeln (9) aufweist, die geeignet sind, sich einer zylindrischen Bahn entlang zu bewegen, die koaxial mit dem zylindrischen Sieb verläuft und sich ganz in der Nähe der Einlass-Seite des Siebs erstreckt, welches Sieb Folgendes umfasst: ein axiales Einlassende (11) an der Einlass-Seite für die Aufnahme der zu trennenden Suspension, ein axiales Ausstoßende (13) an der Einlass-Seite für das Entfernen der abgetrennten Teilchen, langgestreckte Strömungsablenkvorrichtungen (22, 24, 25, 27), die auf der Einlass-Seite des Siebs angeordnet und um die Peripherie des Siebs herum verteilt sind, und Sieblöcher (23, 30, 35), die zwischen den Strömungsablenkvorrichtungen angeordnet sind, wobei sich jede langgestreckte Strömungsablenkvorrichtung mit Bezug auf die mittlere Achse des zylindrischen Siebs schräg und mit Bezug auf die Drehrichtung der Rotorenflügel vom Einlassende des Siebs auf das Ausstoßende des Siebs zu gesehen nach vorn erstreckt, wobei während des Betriebs, wenn das Sieb im Drucksiebapparat einmontiert ist, die Strömungsablenkvorrichtungen die Suspensionsströmung ablenken, die abgetrennte Teilchen enthält, die durch die Rotorenflügel der zylindrischen Bahn entlang mitgeschleppt werden, so dass die Suspensionsströmung eine Bewegungskomponente dem Ausstoßende des Siebs zu erfährt, **dadurch gekennzeichnet, dass** der Abstand zwischen nebeneinanderliegenden operativen Strömungsablenkvorrichtungen (22, 24, 25, 27), in der peripheren Richtung des Siebs gesehen, weniger als 6 mm beträgt.

2. Sieb nach Anspruch 2, **dadurch gekennzeichnet, dass** jede langgestreckte Strömungsablenkvorrichtung (22, 24, 25 ,27) einen Winkel zur Generatrix (G) zum zylindrischen Sieb bildet, der im Bereich von 1 - 40° liegt.

3. Sieb nach Anspruch 2, **dadurch gekennzeichnet, dass** jede Strömungsablenkvorrichtung (22) einen bleibenden Winkel (a) zur Generatrix (G) zum zylindrischen Sieb bildet.

4. Sieb nach Anspruch 2, **dadurch gekennzeichnet, dass** jede Strömungsablenkvorrichtung (24, 25) einen Winkel (b1, c1) zu der Generatrix (G) relativ nahe des Ausstoßendes (13) des Siebs bildet, der größer ist als der Winkel (b2, c2), den jede Strömungsablenkvorrichtung zu der Generatrix relativ nahe des Einlassendes (11) des Siebs bildet.

5. Sieb nach Anspruch 4, **dadurch gekennzeichnet, dass** jede Strömungsablenkvorrichtung (25) einen Winkel (cl, c2) zu der Generatrix (G) bildet, der sich kontinuierlich vergrößert, wenn die Generatrix so bewegt wird, dass der Schnittpunkt sich zwischen der Vorrichtung und der Generatrix in Richtung auf das Ausstoßende (13) des Siebs hin bewegt.

6. Sieb nach Anspruch 4, **dadurch gekennzeichnet, dass** jede Strömungsablenkvorrichtung (24) zu der Generatrix (G) einen Winkel (b1, b2) bildet, der sich schrittweise vergrößert, wenn die Generatrix so bewegt wird, dass der Schnittpunkt zwischen'der Vorrichtung und der Generatrix in Richtung auf das Ausstoßende (13) des Siebs bewegt wird.

7. Sieb nach einem der Ansprüche 1-6, **dadurch gekennzeichnet, dass** das Sieb (26) durch eine flache Platte gleichförmiger Dicke gebildet wird, die zu einer zylindrischen Form gebogen ist, dass eine Mehrzahl langgestreckter paralleler Rillen (28) in der Platte auf der Einlass-Seite des Siebs durch materialreduzierendes maschinelles Bearbeiten der Platte gebildet wird, dass die Sieböffnungen (30) des Siebs in den Rillen offen sind und dass die Rillen durch langgestreckte Wandflächen (27, 29) begrenzt sind, die diese Strömungsablenkvorrichtungen bilden.

8. Sieb nach Anspruch 7, **dadurch gekennzeichnet, dass** die Sieböffnungen (30) in Reihen ausgerichtet sind, wobei sich eine einzige Reihe von Sieböffnungen zwischen nebeneinanderliegenden Strömungsablenkvorrichtungen (27, 29) erstreckt.

9. Sieb nach einem der Ansprüche 1-6, **dadurch gekennzeichnet, dass** das Sieb (33) durch eine Mehrzahl einzelner langgestreckter fester Wandelement (34) gebildet wird, die in einer kreisförmigen Reihe angeordnet sind, wobei sich nebeneinanderliegende Wandelemente parallel zu und in geringem Abstand von einander erstrecken, so dass ein langgestreckter Spalt (35) dazwischen gebildet wird, der eine der Sieböffnungen darstellt, und dass auf der Einlass-Seite des Siebs nebeneinanderliegende Wandelemente Rillen bilden, die durch langgestreckte Wandflächen (27, 29) begrenzt sind, die die Strömungsablenkvorrichtungen darstellen.

10. Sieb nach einem der vorhergehenden Ansprüche, **dadurch gekennzeichnet, dass** die Einlass-Seite durch 5 die Innenseite des Siebs gebildet wird.

11. Sieb nach einem der Ansprüche 1-9, **dadurch gekennzeichnet, dass** die Einlass-Seite durch die Außenseite des Siebs gebildet wird.

12. Methode für die Fertigung eines zylindrischen Siebs für die Verwendung in einem Drucksiebapparat, der dem Abtrennen unerwünschter Teilchen von Papierbreisuspensionen dienen soll, welche Methode folgende Schritte umfasst:
Bilden einer Mehrzahl langgestreckter paralleler Rillen (28) auf einer Seite einer flachen Platte gleichmäßiger Dicke durch materialreduzierendes maschinelles Bearbeiten der Platte,
Ausbilden von Sieböffnungen (30) in der flachen Platte im Bereich einer jeden Rille durch Schneiden der Platte und
Biegen der Platte zu einer zylindrischen Form, so dass die Rillen sich auf der Innenseite der zylindrischen Platte befinden,
**dadurch gekennzeichnet, dass** die Sieböffnungen in der flachen Platte so gebildet werden, dass sie sich von den Rillen hinweg erstrecken und auf die gegenüberliegende Seite der Platte zu divergieren, dass die Rillen derart ausgebildet sind, dass an beiden Seiten jeder Rille Rücken verbleiben, die die Strömungsablenkvorrichtungen (22, 24, 25, 27) am fertigen Sieb bilden, wobei der Abstand zwischen den gebildeten Strömungsablenkvorrichtungen in der peripheren Richtung des Siebs weniger als sechs Millimeter beträgt, und dass das Sieb so gebildet ist, dass die Rillen sich mit Bezug auf die mittlere Achse der zylindrischen Platte schräg erstrecken, wenn die Platte zu einer zylindrischen Form gebogen worden ist.

13. Methode nach Anspruch 12, **dadurch gekennzeichnet, dass** die flache Platte rechteckig ist, dass die ausgerichteten Rillen (28) so gebildet werden, dass sie sich mit Bezug auf die Seitenkanten der Platte schief erstrecken und dass die Platte so zu ihrer zylindrischen Form gebogen wird, dass zwei der gegenüberliegenden Seitenkanten der Platte aneinanderstoßen.

14. Methode nach Anspruch 12, **dadurch gekennzeichnet, dass**, bevor die flache Platte mit den gebildeten Rillen (28) zu einer zylindrischen Form gebogen wird, sie rechteckig zugeschnitten wird, so dass die Rillen sich mit Bezug auf die Seitenkanten der Platte schief erstrecken und dass die rechteckige Platte zu einer zylindrischen Form gebogen wird, so dass zwei der sich gegenüberliegenden Seitenkanten der Platte aneinanderstoßen.

15. Methode nach einem der Ansprüche 12-14, **dadurch gekennzeichnet, dass** jede Sieböffnung (30) durch Laserschneiden gebildet wird.

16. Methode nach Anspruch 15, **dadurch gekennzeichnet, dass** jede Sieböffnung (30) durch einen Laserstrahl gebildet wird, der durch die flache Platte von der gegenüberliegenden Seite der Platte her hindurchschneiden, wobei der Laserstrahl einen axialen Querschnitt aufweist, der durch die Platte in der Richtung von der gegenüberliegenden Seite auf die andere Seite der Platte zu konvergiert.

17. Methode nach einem der Ansprüche 12-14, **dadurch gekennzeichnet, dass** jede Sieböffnung (30) durch 5 Wasserstrahlschneiden gebildet wird.

## Revendications

1. Tamis cylindrique (16, 26, 31, 33) ayant un côté d'admission et un côté de sortie pour le type d'appareil de tamisage sous pression, qui est destiné à la séparation de particules non voulues de suspensions de pâte à papier et qui a un rotor (5) ayant un certain nombre d'aile rotatoires (9) adaptées pour se déplacer le long d'un trajet cylindrique, lequel est coaxial au tamis cylindrique et s'étend assez près du côté d'admission du tamis, lequel tamis comprend une extrémité d'admission axiale (11) au niveau du côté d'admission pour recevoir la suspension à séparer, une extrémité de rejet axiale (13) au niveau du côté d'admission pour éliminer les particules séparées, des éléments de déviation de flux allongés (22, 24, 25, 27), lesquels sont disposés sur le côté d'admission du tamis et distribués autour de la circonférence du tamis, et des trous de tamis (23, 30, 35) disposés entre les éléments de déviation de flux, chaque élément de déviation de flux allongé s'étendant obliquement par rapport à l'axe central du tamis cylindrique et vers l'avant par rapport au sens de rotation desdites ailes rotatoires vu depuis l'extrémité d'admission du tamis vers l'extrémité de rejet du tamis, par lequel durant le fonctionnement, quand le tamis est monté dans ledit appareil de tamisage sous pression, lesdits éléments de déviation de flux dévient le flux de suspension contenant les particules séparées qui sont entraînées par lesdites ailes rotatoires le long dudit trajet cylindrique, de telle sorte que le flux de suspension acquière une composante de mouvement vers l'extrémité de rejet du tamis, **caractérisé en ce que** la distance entre des éléments de déviation de flux opérationnels adjacents (22, 24, 25, 27) vue dans le sens circonférentiel du tamis est inférieure à 6 mm.

2. Tamis selon la revendication 2, **caractérisé en ce que** chaque élément de déviation de flux allongé (22, 24, 25, 27) forme un angle avec la génératrice (G) du tamis cylindrique qui est compris dans la gamme de 1 à 40°.

3. Tamis selon la revendication 2, **caractérisé en ce que** chaque élément de déviation de flux (22) forme un angle constant (a) avec la génératrice (G) du tamis cylindrique.

4. Tamis selon la revendication 2, **caractérisé en ce que** chaque élément de déviation de flux (24 ; 25) forme un angle (b1 ; c1) avec ladite génératrice (G) relativement près de l'extrémité de rejet (13) du tamis qui est supérieur à l'angle (b2 ; c2) que forme chaque élément de déviation de flux avec ladite génératrice relativement près de l'extrémité d'admission (11) du tamis.

5. Tamis selon la revendication 4, **caractérisé en ce que** chaque élément de déviation de flux (25) forme un angle (c1, c2) avec ladite génératrice (G) qui augmente continuellement quand la génératrice est déplacée de telle sorte que le point d'intersection entre ledit élément et la génératrice se déplace dans un sens vers l'extrémité de rejet (13) du tamis.

6. Tamis selon la revendication 4, **caractérisé en ce que** chaque élément de déviation de flux (24) forme un angle (b1, b2) avec ladite génératrice (G) qui augmente par gradins quand la génératrice est déplacée de telle sorte que le point d'intersection entre ledit élément et la génératrice se déplace dans un sens vers l'extrémité de rejet (13) du tamis.

7. Tamis selon l'une quelconque des revendications 1 à 6, **caractérisé en ce que** le tamis (26) est formé par une plaque plane d'épaisseur uniforme, qui est courbée en une forme cylindrique, **en ce qu'**une multiplicité de rainures parallèles allongées (28) sont formées dans la plaque du côté d'admission du tamis par un usinage réducteur de matière de la plaque, **en ce que** les trous de tamis (30) du tamis s'ouvrent dans lesdites rainures, et **en ce que** les rainures sont confinées par des surfaces de parois allongées (27, 29) constituant lesdits éléments de déviation de flux.

8. Tamis selon la revendication 7, **caractérisé en ce que** les trous de tamis (30) sont orientés en rangées, une seule rangée de trous de tamis s'étendant entre des éléments de déviation de flux adjacents (27, 29).

9. Tamis selon l'une quelconque des revendications 1 à 6, **caractérisé en ce que** le tamis (33) est formé par une multiplicité d'éléments de parois solides allongés séparés (34), lesquels sont disposés en une rangée circulaire, des éléments de parois adjacents s'étendant en parallèle les uns aux autres à et à une petite distance les uns des autres, de telle sorte qu'un espace allongé (35) soit formé entre eux et constitue un desdits trous de tamis, et **en ce que** sur le côté d'admission du tamis, des éléments de parois adjacents forment des rainures qui sont confinées par des surfaces de parois allongées (27, 29) constituant lesdits éléments de déviation de flux.

10. Tamis selon l'une quelconque des revendications précédentes, **caractérisé en ce que** ledit côté d'admission est formé par le côté interne du tamis.

11. Tamis selon l'une quelconque des revendications 1 à 9, **caractérisé en ce que** ledit côté d'admission est formé par le côté externe du tamis.,

12. Procédé de production d'un tamis cylindrique destiné à être utilisé dans un appareil de filtrage sous pression conçu pour séparer des particules non voulues de suspensions de pâte à papier, comprenant les étapes de :
- formation d'une multiplicité de rainures parallèles allongées (28) sur un côté d'une plaque plane d'épaisseur uniforme par un usinage réducteur de matière de la plaque,
- formation de trous de filtrage (30) dans la plaque plane dans la zone de chaque rainure par découpe de la plaque, et
- courbure de la plaque en une forme cylindrique, de telle sorte que les rainures se trouvent sur le côté interne de la plaque cylindrique,
**caractérisé en ce que** lesdits trous de tamis sont formés dans la plaque plane de telle sorte qu'ils s'étendent depuis lesdites rainures et divergent vers le côté opposé de la plaque, **en ce que** lesdites rainures sont formées de manière à laisser des rebords des deux côtés de chaque rainure, formant des éléments de déviation de flux (22, 24, 25, 27) sur le tamis achevé, la distance entre les éléments de déviation de flux formés étant inférieure à six millimètres dans le sens circonférentiel du tamis, et **en ce que** le tamis est formé de telle sorte que lesdites rainures s'étendent obliquement par rapport à l'axe central de la plaque cylindrique quand la plaque a été courbée dans sa forme cylindrique.

13. Procédé selon la revendication 12, **caractérisé en ce que** la plaque plane est rectangulaire, **en ce que** les rainures organisées (28) sont formées de telle sorte qu'elles s'étendent obliquement par rapport aux arêtes latérales de la plaque, et **en ce que** la plaque est courbée en sa forme cylindrique de façon à ce que deux des arêtes latérales opposées de la plaque se jouxtent.

14. Procédé selon la revendication 12, **caractérisé en ce qu'**avant que la plaque plane à rainures formées (28) ne soit courbée en une forme cylindrique, elle est coupée en une forme rectangulaire, de telle sorte que les rainures s'étendent obliquement par rapport aux arêtes latérales de la plaque, et **en ce que** la plaque rectangulaire est courbée en une forme cylindrique de façon à ce que deux des arêtes latérales opposées de la plaque se jouxtent.

15. Procédé selon l'une quelconque des revendications 12 à 14, **caractérisé en ce que** chaque trou de tamis (30) est formé par découpe au laser.

16. Procédé selon la revendication 15, **caractérisé en ce que** chaque trou de tamis (30) est formé au moyen d'un faisceau laser qui coupe à travers la plaque plane à partir dudit côté opposé de la plaque, le faisceau laser ayant une coupe transversale axiale qui converge à travers la plaque dans le sens depuis ledit côté opposé vers ledit un côté de la plaque.

17. Procédé selon l'une quelconque des revendications 12 à 14, **caractérisé en ce que** chaque trou de tamis (30) est formé par découpe à l'eau.
